# FASCICULE DE BREVET EUROPEEN

(11) **EP 4 047 253 B1**
(45) Date de publication et mention de la délivrance du brevet: **31.07.2024**
(21) Numéro de dépôt: 22156953.6
(22) Date de dépôt: 16.02.2022
(51) Int. Cl.: F16L 23/18, F16L 23/02, F16J 15/08, F16J 15/10, F16J 15/06

(54) **JOINT D'ÉTANCHÉITÉ PLAT POUR BRIDE AVEC BORD PÉRIPHÉRIQUE FORMANT DES ARCS DE CERCLE DISTINCTS**
FLACHE DICHTUNG FÜR FLANSCH MIT UMLAUFENDEM RAND, DER UNTERSCHIEDLICHE KREISBÖGEN BILDET
FLAT SEAL FOR FLANGE WITH PERIPHERAL EDGE FORMING SEPARATE CIRCLE ARCS

(30) Priorité: 17.02.2021 FR 2101532
(43) Date de publication de la demande: 24.08.2022
(73) Titulaire: Latty International S.A., 91400 Orsay (FR)
(72) Inventeur: NICOLI, Sébastien, 28190 Saint-Georges-sur-Eure (FR); ADJEMOUT, Mohand, 28200 Mainvilliers (FR); HUARD, Stéphane, Daniel, Armand, 28300 Mainvilliers (FR)
(74) Mandataire: Lavoix

(56) Documents cités:
- CN-A- 106 122 630
- DE-U1- 9 405 913
- FR-A1- 2 168 394

## Description

La présente invention concerne un joint d'étanchéité plat pour bride, le joint définissant un axe central.

Un tel joint d'étanchéité est destiné à assurer une étanchéité entre deux éléments de bride formant une jonction de canalisation. Le joint d'étanchéité est délimité radialement par un bord périphérique (extérieur), et un bord intérieur circulaires.

Les deux éléments de bride sont maintenus l'un contre l'autre selon l'axe central par des boulons ou des vis disposés angulairement autour de l'axe central dans deux collerettes formées respectivement par les deux éléments. Les normes en vigueur, par exemple la norme ASME B16.5, définissent des dimensions caractéristiques des deux éléments en fonction d'un diamètre nominal intérieur de la canalisation et d'une classe de pression de la canalisation.

Les deux paramètres que sont le diamètre nominal et la classe de pression déterminent par exemple le nombre et le diamètre des perçages réalisées pour les boulons ou les vis, ainsi que la distance à laquelle se trouvent les perçages par rapport à l'axe central. Pour un même diamètre nominal de canalisation, les perçages sont d'autant plus éloignés de l'axe central que la classe de pression est élevée.

Afin de centrer le joint d'étanchéité, il est connu de caler son bord périphérique sur les perçages des éléments de bride. Dit autrement, le joint d'étanchéité est placé entre les deux éléments de bride de telle manière que son bord périphérique soit adjacent à tous les perçages.

En pratique, pour des brides ayant un même diamètre nominal de canalisation, on a donc recours à une pluralité de joints d'étanchéité de diamètres extérieurs croissants, chaque joint ayant un diamètre extérieur adapté à une classe de pression. Ceci conduit, pour le producteur, à produire toute une gamme de joints pour couvrir toutes les classes de pression, et, pour l'utilisateur, à s'approvisionner en de nombreux joints de diamètres différents pour la même raison. Ceci a des conséquences négatives sur les coûts globaux de production, comme d'approvisionnement. Ceci nécessite aussi, pour l'utilisateur, de choisir le bon joint d'étanchéité en fonction, non seulement du diamètre nominal de la canalisation, mais aussi de la classe de pression.

CN 106122 630 A décrit un joint d'étanchéité pour des brides adaptées à différent niveaux de pression, comportant des protubérances radiales.

FR 2 168 394 A1 décrit un joint d'étanchéité comportant des doigts radiaux espacés angulairement.

DE 94 05 913 U1 décrit des joints d'étanchéité présentant des bords en spirale, ou définissant des ouvertures en spirale.

Un but de l'invention est donc de fournir des joints d'étanchéité permettant de réduire ces coûts globaux, sans réduction de leurs performances en termes d'étanchéité.

A cet effet, l'invention a pour objet un joint d'étanchéité selon la revendication 1.

Selon des modes particuliers de réalisation, le joint d'étanchéité comprend l'une ou plusieurs des caractéristiques correspondant aux revendications 2 à 10, prise(s) isolément ou selon toutes les combinaisons techniquement possibles.

L'invention sera mieux comprise à la lecture de la description qui va suivre, donnée uniquement à titre d'exemple et faite en se référant aux dessins annexés, sur lesquels :
- la figure 1 est une vue axiale schématique d'un même joint d'étanchéité selon l'invention, en position centrée sur quatre éléments de brides distincts, de diamètre nominal 4 pouces, correspondant aux classes de pression 150, 300, 600 et 900 dans la norme ASME B16.5, et
- la figure 2 est une vue axiale schématique d'un autre joint d'étanchéité selon l'invention, en position centrée sur quatre éléments de brides distincts, de diamètre nominal 12 pouces, correspondant aux classes de pression 150, 300, 600 et 900 dans la norme ASME B16.5.

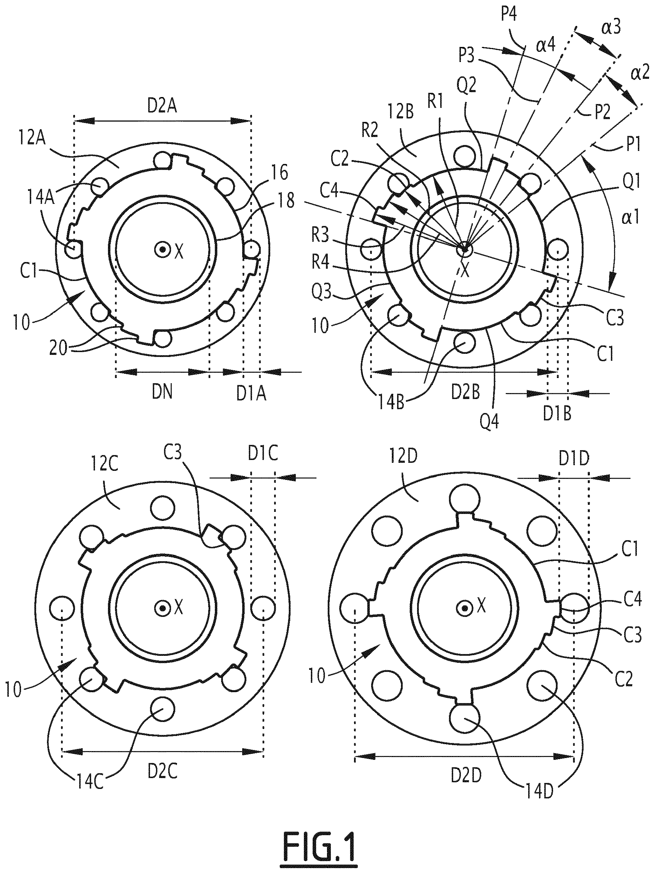

En référence à la figure 1, on décrit un joint d'étanchéité 10 selon l'invention, en position centrée sur quatre brides 12A, 12B, 12C, 12D. Pour chacune des brides, seul un des deux éléments de la bride est représenté.

Les brides 12A, 12B, 12C, 12D ont par exemple des dimensions dictées par la norme ASME B16.5 bien connue de l'homme du métier. Dans l'exemple, les brides 12A, 12B, 12C, 12D ont un même diamètre nominal DN de 4 pouces, soit environ 100 mm.

La bride 12A (en haut à gauche) est adaptée pour la classe de pression 150 (pression inférieure à 20 bars) et comporte huit perçages 14A répartis à 45° les uns des autres autour d'un axe central X du joint d'étanchéité 10.

Selon la norme précitée, les perçages 14A sont adaptés pour des vis (non représentées) de type M16, avec un diamètre D1A de 19 mm. Les centres des perçages 14A sont situés sur un cercle de diamètre D2A de 190,5 mm.

La bride 12B (en haut à droite) est adaptée pour la classe de pression 300 (pression inférieure à 50 bars) et comporte aussi huit perçages 14B répartis à 45° les uns des autres autour de l'axe central X.

Les perçages 14B sont adaptés pour des vis (non représentées) de type M20, avec un diamètre D1B de 22,2 mm. Leurs centres sont situés sur un cercle de diamètre D2B de 200 mm.

La bride 12C (en bas à gauche) est adaptée pour la classe de pression 600 (pression inférieure à 100 bars) et comporte aussi huit perçages 14C répartis à 45° les uns des autres autour de l'axe central X.

Les perçages 14C sont adaptés pour des vis (non représentées) de type M24, avec un diamètre D1C de 25,4 mm. Leurs centres sont situés sur un cercle de diamètre D2C de 215,9 mm.

La bride 12D (en bas à droite) est adaptée pour la classe de pression 900 (pression inférieure à 150 bars) et comporte aussi huit perçages 14D répartis à 45° les uns des autres autour de l'axe central X.

Les perçages 14D sont adaptés pour des vis (non représentées) de type M30, avec un diamètre D1D de 31,8 mm. Leurs centres sont situés sur un cercle de diamètre D2D de 235 mm.

Le joint d'étanchéité 10 est plat, c'est-à-dire qu'il s'étend principalement perpendiculairement à l'axe central X. Le joint d'étanchéité 10 présente par exemple une épaisseur avantageusement constante selon l'axe central X, par exemple comprise entre 1 et 8 mm
Le joint d'étanchéité 10 comprend par exemple, à au moins 90% en masse, des fibres, du graphite armé ou au moins un métal.

Le joint d'étanchéité 10 est délimité radialement par un bord périphérique 16 comportant, par rapport à l'axe central X, quatre quadrants Q1, Q2, Q3, Q4 se déduisant successivement les uns des autres par des rotations de 90° autour de l'axe central X. Le joint d'étanchéité 10 est par exemple délimité par un bord radialement intérieur 18 circulaire centré sur l'axe central X. Avantageusement, l'ensemble du joint d'étanchéité 10 présente une symétrie d'ordre 4 ou un multiple de 4 autour de l'axe central X.

Chacun des quadrants Q1, Q2, Q3, Q4 comprend un premier arc de cercle C1, un deuxième arc de cercle C2, un troisième arc de cercle C3 et un quatrième arc de cercle C4 centrés sur l'axe central X et définissant respectivement un premier rayon R1, un deuxième rayon R2, un troisième rayon R3 et un quatrième rayon R4 distincts les uns des autres et allant croissant. Dit autrement, l'inéquation R1 < R2 < R3 < R4 s'applique.

Selon des variantes non représentées, chacun des quadrants Q1, Q2, Q3, Q4 du bord périphérique 16 ne comporte que trois arcs de cercles, ou en comprend plus de quatre.

Le premier arc de cercle C1, le deuxième arc de cercle C2, le troisième arc de cercle C3 et le quatrième arc de cercle C4 sont avantageusement obtenus en réalisant des découpes du bord périphérique 16.

Le premier arc de cercle C1, le deuxième arc de cercle C2, le troisième arc de cercle C3 et le quatrième arc de cercle C4 sont par exemple séparés par des portions 20 du bord périphérique 16 s'étendant respectivement dans des plans radiaux P1, P2, P3, P4 (passant par l'axe central X). Les portions 20 sont par exemple rectilignes. Avantageusement, chacun des quadrants Q1, Q2, Q3, Q4 est constitué par une succession d'arcs de cercle séparés par des segments.

Le premier arc de cercle C1, le deuxième arc de cercle C2, le troisième arc de cercle C3 et le quatrième arc de cercle C4 sont par exemple consécutifs angulairement autour de l'axe central X. Dans ce cas, les arcs C2 à C4 forment des « marches d'escalier ».

En variante (non représentée), le deuxième arc de cercle C2 et le troisième arc de cercle C3 sont situés angulairement de part et d'autre du quatrième arc de cercle C4 autour de l'axe central X. Dans ce cas, les arcs C2 à C4 ont une forme en « podium olympique » (avec une marche C1 la plus haute, encadrée par deux marches C2, C3 plus basses et de hauteurs inégales).

Le premier arc de cercle C1, le deuxième arc de cercle C2, le troisième arc de cercle C3 et le quatrième arc de cercle C4 définissent respectivement un premier angle α1, un deuxième angle α2, un troisième angle α3 et un quatrième angle α4 par rapport à l'axe central X.

Avantageusement, l'angle α1 est supérieur à 45°. Ceci donne aux arcs de cercle C2, C3, C4 considérés ensemble une étendue angulaire avantageusement compatible avec le fait que les arcs de cercle C2, C3, C4 s'étendent entre deux perçages 14A consécutifs de la bride 12A (en haut à gauche de la figure 1).

Avantageusement, chacun du deuxième angle α2, du troisième angle α3 et du quatrième angle α4 est inférieur 15°. Par exemple, le deuxième angle α2, le troisième angle α3 et le quatrième angle α4 sont sensiblement égaux les uns aux autres.

Le fonctionnement du joint d'étanchéité 10 va maintenant être brièvement décrit.

Le joint d'étanchéité 10 est d'abord placé sur la bride 12A et est facilement centré sur cette bride. Les premiers arcs de cercle C1 des quadrants Q1, Q2, Q3, Q4 sont par exemple en contact avec des goujons (non représentés) situés dans les huit perçages 14A de la bride, ce qui détermine une position unique du joint d'étanchéité 10 en translation par rapport à la bride 12A. Dans l'exemple, les goujons butent angulairement contre les portions 20 délimitant les premiers arcs de cercle C1. Ceci détermine, dans l'exemple, huit positions angulaires centrées possibles pour le joint d'étanchéité 10.

Dans l'exemple, le premier rayon R1 est légèrement supérieur à (D2A - D1A)/2, du fait que les goujons ont un diamètre (non représenté) légèrement inférieur à celui des perçages 14A. Le premier rayon R1 est par exemple de 87 mm.

Le joint d'étanchéité 10 peut également être placé sur la bride 12B et est facilement centré sur cette bride. Le deuxième arc de cercle C2 de chacun des quadrants Q1, Q2, Q3, Q4 est en contact avec des goujons (non représentés) dans quatre des perçages 14B de la bride, ce qui détermine une position unique du joint d'étanchéité 10 en translation par rapport à la bride 12B. Dans l'exemple, les goujons considérés butent éventuellement sur les portions 20 séparant le deuxième arc de cercle C2 et le troisième arc de cercle C3. Ceci détermine, dans l'exemple, huit positions angulaires centrées possibles pour le joint d'étanchéité 10.

Dans l'exemple, le deuxième rayon R2 est donc légèrement supérieur à (D2B - D1B)/2, et est par exemple égal à 90,5 mm.

Le joint d'étanchéité 10 peut également être placé sur la bride 12C et est facilement centré sur cette bride. Le troisième arc de cercle C3 de chacun des quadrants Q1, Q2, Q3, Q4 est en contact avec des goujons (non représentés) dans quatre des perçages 14C de la bride, ce qui détermine une position unique du joint d'étanchéité 10 en translation par rapport à la bride 12C. Dans l'exemple, les goujons considérés butent éventuellement sur les portions 20 séparant le troisième arc de cercle C3 et le quatrième arc de cercle C4. Ceci détermine, dans l'exemple, huit positions angulaires centrées possibles pour le joint d'étanchéité 10.

Dans l'exemple, le deuxième rayon R3 est donc légèrement supérieur à (D2C - D1C)/2, et est par exemple égal à 96,5 mm.

Le joint d'étanchéité 10 peut être placé sur la bride 12D et est facilement centré sur cette bride. Le quatrième arc de cercle C4 de chacun des quadrants Q1, Q2, Q3, Q4 est en contact avec des goujons (non représentés) dans quatre des perçages 14D de la bride, ce qui détermine une position unique du joint d'étanchéité 10 en translation par rapport à la bride 12D.

Dans l'exemple, le deuxième rayon R4 est donc légèrement supérieur à (D2D - D1D)/2, et est par exemple de 101,6 mm.

Grâce aux caractéristiques décrites ci-dessus, le joint d'étanchéité 10 est utilisable et facilement centré sur les quatre brides 12A, 12B, 12C et 12D, sans réduction de sa performance en terme d'étanchéité par rapport aux joints existants. Le joint d'étanchéité 10 est donc adapté à une série de quatre brides, et non à une seule bride. Ceci permet de réduire les coûts globaux de production et/ou d'approvisionnement.

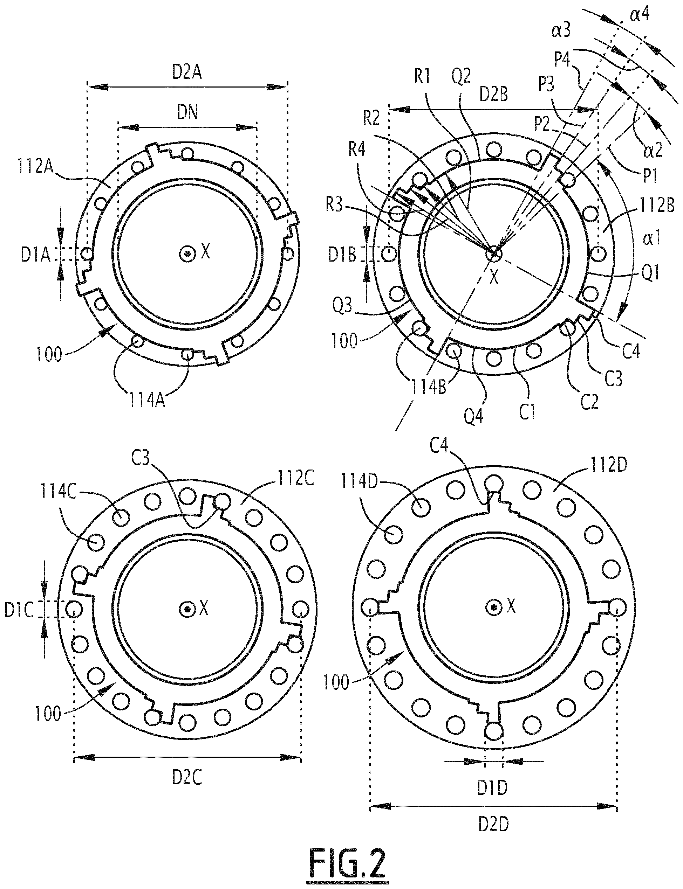

En référence à la figure 2, on va maintenant décrire un joint d'étanchéité 100 constituant une variante du joint d'étanchéité 10. Le joint d'étanchéité 100 est analogue au joint d'étanchéité 10 représenté sur la figure 1. Les éléments similaires portent les mêmes références numériques et ne seront pas décrits à nouveau. Seules les différences seront décrites en détail ci-après.

Le joint d'étanchéité 100 est adapté pour quatre brides 112A, 112B, 112C, 112D qui diffèrent des brides représentées sur la figure 1. Pour chacune de ces brides, seul un des deux éléments de la bride est représenté.

Les brides 112A, 112B, 112C, 112D ont par exemple des dimensions dictées par la norme ASME B16.5. Dans l'exemple, les brides 112A, 112B, 112C, 112D ont un même diamètre nominal DN de 12 pouces, soit environ 300 mm.

La bride 112A (en haut à gauche) est adaptée pour la classe de pression 150 et comporte douze perçages 114A répartis à 30° les uns des autres autour de l'axe central X. Les perçages 114A sont adaptés pour des vis (non représentées) de type M24, avec un diamètre D1A de 25,4 mm. Les centres des perçages sont situés sur un cercle de diamètre D2A de 431,8 mm.

La bride 112B (en haut à droite) est adaptée pour la classe de pression 300 et comporte seize perçages 114B répartis à 22,5° les uns des autres autour de l'axe central X. Les perçages 114B sont adaptés pour des vis (non représentées) de type M30, avec un diamètre D1B de 31,8 mm. Leurs centres sont situés sur un cercle de diamètre D2B de 450,8 mm.

La bride 112C (en bas à gauche) est adaptée pour la classe de pression 600 et comporte vingt perçages 114C répartis à 18° les uns des autres autour de l'axe central X. Les perçages 114C sont adaptés pour des vis (non représentées) de type M33, avec un diamètre D1C de 35 mm. Leurs centres sont situés sur un cercle de diamètre D2C de 489 mm.

La bride 112D (en bas à droite) est adaptée pour la classe de pression 900 et comporte aussi vingt perçages 114D répartis à 18° les uns des autres autour de l'axe central X. Les perçages 114D sont adaptés pour des vis (non représentées) de type M36, avec un diamètre D1D de 38,1 mm. Leurs centres sont situés sur un cercle de diamètre D2D de 533,4 mm.

Avantageusement, l'angle α1 est supérieur à 60°. Ceci donne aux arcs de cercle C2, C3, C4 considérés ensemble une étendue angulaire avantageusement compatible avec le fait que les arcs de cercle C2, C3, C4 s'étendent entre deux perçages 114A consécutifs de la bride 112A.

Avantageusement, chacun du deuxième angle α2, du troisième angle α3 et du quatrième angle α4 est inférieur 10°.

Le fonctionnement du joint d'étanchéité 100 est analogue à celui du joint d'étanchéité 10.

Sur la bride 112A, les premiers arcs de cercle C1 des quadrants Q1, Q2, Q3, Q4 sont en contact avec des goujons (non représentés) dans les douze perçages 14A de la bride, ce qui détermine une position unique du joint d'étanchéité 100 en translation par rapport à la bride 112A. Dans l'exemple, le premier rayon R1, légèrement supérieur à (D2A - D1A)/2, est par exemple égal à 204,5 mm.

Sur la bride 112B, les deuxièmes arcs de cercle C2 des quadrants Q1, Q2, Q3, Q4 sont en contact avec des goujons (non représentés) dans quatre des perçages 114B de la bride, ce qui détermine une position unique du joint d'étanchéité 100 en translation par rapport à la bride 112B. Dans l'exemple, le deuxième rayon R2, légèrement supérieur à (D2B - D1B)/2, est par exemple égal à 211 mm.

Sur la bride 112C, les troisièmes arcs de cercle C3 des quadrants Q1, Q2, Q3, Q4 sont en contact avec des goujons (non représentés) dans quatre des perçages 114C de la bride, ce qui détermine une position unique du joint d'étanchéité 100 en translation par rapport à la bride 112C. Dans l'exemple, le deuxième rayon R3, légèrement supérieur à (D2C - D1C)/2, est par exemple égal à 228,5 mm.

Sur la bride 112D, les quatrièmes arcs de cercle C4 des quadrants Q1, Q2, Q3, Q4 sont en contact avec des goujons (non représentés) dans quatre des perçages 114D de la bride, ce qui détermine une position unique du joint d'étanchéité 100 en translation par rapport à la bride 112D. Dans l'exemple, le deuxième rayon R4, légèrement supérieur à (D2D - D1D)/2, est par exemple égal à 249 mm.

Grâce aux caractéristiques décrites ci-dessus, le joint d'étanchéité 100 est utilisable et facilement centré sur les quatre brides 112A, 112B, 112C et 112D, sans réduction de sa performance en terme d'étanchéité par rapport aux joints existants.

L'homme du métier pourra aisément concevoir des joints d'étanchéité analogues aux joints d'étanchéité 10 et 100 décrits ci-dessus, adaptés à d'autres séries de brides ayant d'autres diamètres nominaux et correspondant par exemple à différentes classes de pression. Grâce aux joints d'étanchéité selon l'invention, adaptés à des séries de trois, quatre ou plus brides distinctes, il est par exemple possible, pour un diamètre nominal de canalisation donné, de couvrir toutes les classes de pression avec un nombre réduit de joints distincts, par exemple seulement deux joints distincts.
rapport à la bride 112D. Dans l'exemple, le deuxième rayon R4, légèrement supérieur à (D2D - D1D)/2, est par exemple égal à 249 mm.

Grâce aux caractéristiques décrites ci-dessus, le joint d'étanchéité 100 est utilisable et facilement centré sur les quatre brides 112A, 112B, 112C et 112D, sans réduction de sa performance en terme d'étanchéité par rapport aux joints existants.

L'homme du métier pourra aisément concevoir des joints d'étanchéité analogues aux joints d'étanchéité 10 et 100 décrits ci-dessus, adaptés à d'autres séries de brides ayant d'autres diamètres nominaux et correspondant par exemple à différentes classes de pression. Grâce aux joints d'étanchéité selon l'invention, adaptés à des séries de trois, quatre ou plus brides distinctes, il est par exemple possible, pour un diamètre nominal de canalisation donné, de couvrir toutes les classes de pression avec un nombre réduit de joints distincts, par exemple seulement deux joints distincts.

## Revendications

1. Joint d'étanchéité (10 ; 100) plat pour bride (12A, 12B, 12C, 12D ;112A, 112B, 112C, 112D), le joint d'étanchéité (10 ; 100) définissant un axe central (X) et étant délimité radialement par un bord périphérique (16) comportant par rapport à l'axe central (X), quatre quadrants (Q1, Q2, Q3, Q4) se déduisant successivement les uns des autres par des rotations de 90° autour de l'axe central (X),
**caractérisé en ce que** chacun des quadrants (Q1, Q2, Q3, Q4) comprenant au moins un premier arc de cercle (C1), un deuxième arc de cercle (C2) et un troisième arc de cercle (C3) centrés sur l'axe central (X) et définissant respectivement un premier rayon (R1), un deuxième rayon (R2) et un troisième rayon (R3) distincts les uns des autres et allant croissant.

2. Joint d'étanchéité (10 ; 100) selon la revendication 1, dans lequel le premier arc de cercle (C1) définit un premier angle (α1) par rapport à l'axe central (X), l'angle (α1) étant supérieur à 45°.

3. Joint d'étanchéité (10 ; 100) selon la revendication 1 ou 2, dans lequel le deuxième arc de cercle (C2) et le troisième arc de cercle (C3) définissent respectivement un deuxième angle (α2) et un troisième angle (α3) par rapport à l'axe central (X), chacun du deuxième angle (α2) et du troisième angle (α3) étant inférieur 15°.

4. Joint d'étanchéité (10 ; 100) selon la revendication 3, dans lequel le deuxième angle (α2) et le troisième angle (α3) sont sensiblement égaux l'un avec l'autre.

5. Joint d'étanchéité (10 ; 100) selon l'une quelconque des revendications 1 à 4, dans lequel chacun des quadrants (Q1, Q2, Q3, Q4) comprend en outre un quatrième arc de cercle (C4) définissant un quatrième rayon (R4) supérieur au troisième rayon (R3).

6. Joint d'étanchéité (10 ; 100) selon la revendication 5, dans lequel le premier arc de cercle (C1), le deuxième arc de cercle (C2), le troisième arc de cercle (C3) et le quatrième arc de cercle (C4) sont consécutifs angulairement autour de l'axe central (X).

7. Joint d'étanchéité (10 ; 100) selon la revendication 5, dans lequel le deuxième arc de cercle (C2) et le troisième arc de cercle (C3) sont situés angulairement de part et d'autre du quatrième arc de cercle (C4) autour de l'axe central (X).

8. Joint d'étanchéité (10 ; 100) selon l'une quelconque des revendications 1 à 7, dans lequel le premier arc de cercle (C1), le deuxième arc de cercle (C2) et le troisième arc de cercle (C3) sont séparés par des portions (20) du bord périphérique (16) s'étendant respectivement dans des plans radiaux (P1, P2, P3, P4).

9. Joint d'étanchéité (10 ; 100) selon l'une quelconque des revendications 1 à 8, comprenant, à au moins 90% en masse, des fibres, du graphite armé ou au moins un métal.

10. Joint d'étanchéité (10 ; 100) selon l'une quelconque des revendications 1 à 9, délimité par un bord radialement intérieur (18) circulaire et centré sur l'axe central (X).

## Patentansprüche

1. Flachdichtung (10; 100) für einen Flansch (12A, 12B, 12C, 12D; 112A, 112B, 112C, 112D), wobei die Dichtung (10; 100) eine Mittelachse (X) definiert und radial durch einen Umfangsrand (16) begrenzt ist, umfassend
in Bezug auf die Mittelachse (X), vier Quadranten (Q1, Q2, Q3, Q4), die sich nacheinander durch 90°-Drehungen um die Mittelachse (X) voneinander ableiten,
**dadurch gekennzeichnet, dass**
jeder der Quadranten (Q1, Q2, Q3, Q4) mindestens einen ersten Kreisbogen (C1), einen zweiten Kreisbogen (C2) und einen dritten Kreisbogen (C3) umfasst, die auf der Mittelachse (X) zentriert sind und jeweils einen ersten Radius (R1), einen zweiten Radius (R2) und einen dritten Radius (R3) definieren, die voneinander verschieden sind und zunehmend größer werden.

2. Dichtung (10; 100) nach Anspruch 1, wobei der erste Kreisbogen (C1) einen ersten Winkel (α1) in Bezug auf die Mittelachse (X) definiert, wobei der Winkel (α1) größer als 45° ist.

3. Dichtung (10; 100) nach Anspruch 1 oder 2, wobei der zweite Kreisbogen (C2) und der dritte Kreisbogen (C3) jeweils einen zweiten Winkel (α2) und einen dritten Winkel (α3) in Bezug auf die Mittelachse (X) definieren, wobei jeder von dem zweiten Winkel (α2) und dem dritten Winkel (α3) kleiner als 15° ist.

4. Dichtung (10; 100) nach Anspruch 3, wobei der zweite Winkel (α2) und der dritte Winkel (α3) untereinander im Wesentlichen gleich sind.

5. Dichtung (10; 100) nach einem der Ansprüche 1 bis 4, wobei von den Quadranten (Q1, Q2, Q3, Q4) zusätzlich einen vierten Kreisbogen (C4) umfasst, der einen vierten Radius (R4) definiert, der größer ist als der dritte Radius (R3).

6. Dichtung (10; 100) nach Anspruch 5, wobei der erste Kreisbogen (C1), der zweite Kreisbogen (C2), der dritte Kreisbogen (C3) und der vierte Kreisbogen (C4) winkelmäßig aufeinanderfolgend um die Mittelachse (X) angeordnet sind.

7. Dichtung (10; 100) nach Anspruch 5, wobei der zweite Kreisbogen (C2) und der dritte Kreisbogen (C3) winkelmäßig auf beiden Seiten des vierten Kreisbogens (C4) um die Mittelachse (X) angeordnet sind.

8. Dichtung (10; 100) nach einem der Ansprüche 1 bis 7, wobei der erste Kreisbogen (C1), der zweite Kreisbogen (C2) und der dritte Kreisbogen (C3) durch Abschnitte (20) des Umfangsrands (16) getrennt sind, die sich jeweils in radialen Ebenen (P1, P2, P3, P4) erstrecken.

9. Dichtung (10; 100) nach einem der Ansprüche 1 bis 8, mindestens umfassend 90 Masse-% Fasern, armierten Graphit oder mindestens ein Metall.

10. Dichtung (10; 100) nach einem der Ansprüche 1 bis 9, begrenzt durch einen kreisförmigen, radial inneren Rand (18), der auf der Mittelachse (X) zentriert ist.

## Claims

1. A flat seal (10; 100) for a flange (12A, 12B, 12C, 12D; 112A, 112B, 112C, 112D), the seal (10; 100) defining a central axis (X) and being delimited radially by a peripheral edge (16) comprising
with respect to the central axis (X), four quadrants (Q1, Q2, Q3, Q4) being successively derived from one another by rotations of 90° about the central axis (X),
**characterised in that**
each of the quadrants (Q1, Q2, Q3, Q4) comprising at least a first circular arc (C1), a second circular arc (C2) and a third circular arc (C3) centred on the central axis (X) and respectively defining a first radius (R1), a second radius (R2) and a third radius (R3) distinct from one another and increasing.

2. A seal (10; 100) according to claim 1, wherein the first circular arc (C1) defines a first angle (α1) with respect to the central axis (X), the angle (α1) being greater than 45°.

3. A seal (10; 100) according to claim 1 or 2, wherein the second circular arc (C2) and the third circular arc (C3) respectively define a second angle (α2) and a third angle (α3) with respect to the central axis (X), each of the second angle (α2) and the third angle (α3) being less than 15°.

4. A seal (10; 100) according to claim 3, wherein the second angle (α2) and the third angle (α3) are substantially equal to each other.

5. A seal (10; 100) according to any one of claims 1 to 4, wherein each of the quadrants (Q1, Q2, Q3, Q4) further comprises a fourth circular arc (C4) defining a fourth radius (R4) greater than the third radius (R3).

6. A seal (10; 100) according to claim 5, wherein the first circular arc (C1), the second circular arc (C2), the third circular arc (C3) and the fourth arc circular arc (C4) are angularly consecutive about the central axis (X).

7. A seal (10; 100) according to claim 5, in which the second circular arc (C2) and the third circular arc (C3) are located angularly on either side of the fourth circular arc (C4) about the central axis (X).

8. A seal (10; 100) according to any one of claims 1 to 7, in which the first circular arc (C1), the second circular arc (C2) and the third circular arc (C3) are separated by portions (20) of the peripheral edge (16) extending respectively in radial planes (P1, P2, P3, P4).

9. A seal (10; 100) according to any one of claims 1 to 8, comprising, to at least 90% in mass, fibres, reinforced graphite or at least one metal.

10. A seal (10; 100) according to any one of claims 1 to 9, delimited by a circular radially inner edge (18) centred on the central axis (X).
